# EUROPÄISCHE PATENTANMELDUNG

(11) **EP 0 897 037 A1**
(43) Veröffentlichungstag der Anmeldung: **17.02.1999**
(21) Anmeldenummer: 98114483.5
(22) Anmeldetag: 31.07.1998
(51) Int. Cl.: E03C 1/01, F16F 1/12, F16F 1/13

(54) **Zugfederanordnung**

(30) Priorität: 11.08.1997 DE 29714215 U
(71) Anmelder: Mauser, Viktor, 90491 Nürnberg (DE)
(72) Erfinder: Mauser, Viktor, 90491 Nürnberg (DE)
(74) Vertreter: Neidl-Stippler & Partner

(57) **Zusammenfassung**

Die Erfindung betrifft eine Zugfederanordnung zur Anbringung von Abdeckteilen und Zierdeckeln über Vertiefungen und soll die Aufgabe lösen, eine einfachere und leichtere Befestigung für Abdeckungen zu schaffen. Die Aufgabe wird durch eine Zugfederanordnung zur Anbringung von Abdeckteilen über Vertiefungen und Zierdeckeln gelöst, mit einem ersten Befestigungsteil 12 zum Anbringen der Zugfederanordnung 10 in der Vertiefung, Ausschnitten oder Montageschächten; einer elastischen Rückzugsvorrichtung 11, die in ihre Ruhelage vorgespannt ist; und einem zweiten Befestigungsteil 14 zum Anbringen am Inneren de Abdeckteils 16.

## Beschreibung

Die Erfindung betrifft eine Zugfederanordnung, insbesondere zur lösbaren Anbringung von Abdeckungen über Vertiefungen und Zierdeckeln.

Ganz besonders bezieht sich die Zugfederanordnung auf die Abdeckung von Vertiefungen, in denen Schrauben in einer Vertiefung eingeschraubt sind und nun abgedeckt werden sollen.

Zugfederanordnungen als solche sind allgemein bekannt. Sie werden üblicherweise zum elastischen Aneinanderbefestigen von Teilen verwendet, bspw. von beweglichen Bürolampenteilen, um eine elastische Beweglichkeit von Teilen sicherzustellen.

Bisher wurden allerdings Abdeckungen nicht so angebracht, daß sie in Richtung der abzudeckenden Vertiefung vorgespannt sind, sondern diese wurden bspw. mit seitlichen Federelementen, die sich gegen die Wände der Vertiefung spannten, wie bspw. die bekannten Abdeckungen für Elektroanschlüsse, hergestellt. Diese hatten den Nachteil, inbesondere bei Deckenanschlüssen oder aber auch seitlichen Anschlüssen, bei denen keine guter Anschluß der Abdeckung an den Seitenwänden der Vertiefung möglich war, herauszufallen oder sich nicht mit der Umgebung abschließend einbringen zu lassen.

Es ist daher Aufgabe der Erfindung, eine einfachere und leichtere Befestigung für Abdeckungen, die diese zuverlässig an ihrem Ort hält, zu schaffen.

Die Aufgabe wird erfindungsgemäß durch eine Zugfederanordnung zur Anbringung von Abdeckteilen über Vertiefungen und Zierdeckel, mit einem ersten Befestigungsteil zum Anbringen der Zugfederanordnung in der Vertiefung, Ausschnitten oder Montageschächten; einer elastischen Rückzugsvorrichtung, die in ihre Ruhelage vorgespannt ist und einem zweiten Befestigungsteil zum Anbringen am Inneren des Abdeckteils, gelöst.

Es ist vorteilhaft, daß die Zugfederanordnung ferner eine Haltevorrichtung zum Handhaben der Zugfeder-Anordnung aufweist.

Es ist besonders günstig, falls die elastische Rückzugvorrichtung eine Feder ist.

Vorteilhafterweise kann die Feder bspw. eine Feder aus Metall oder Kunststoff sein - es können aber auch - je nach anzubringender Abdeckung - hydraulische oder andere elastische Mittel, wie gummielastische Kunststoffe, Gummi od. dgl. als Feder im weiteren Sinne eingesetzt werden - d.h. daß die Bezeichnung "Feder" nicht auf Spiralfedern od. dgl. beschränkt ist sondern allgemein bedeuten soll, daß es sich um eine elastisch in eine Rückzugsposition vorgespannte Anordnung handelt, die durch Zug verlängert werden kann. Es kann sich bspw. bei der elastischen Rückzugsvorrichtung auch um ein elastisches Band handeln, an dem dann Befestigungsteile angebracht sind - entweder aus dem gleichen Material, wie bspw. Öffnungen in einem elastischen Kunststoff - oder aber daran angebrachte Ösen aus einem anderen Material, wie Metall, einem anderen Kunststoff etc.

Es kann bevorzugt sein, daß die Haltevorrichtung aus dem gleichen Material wie die Feder ist.

Es ist aber auch möglich, daß mindestens eine Haltevorrichtung aus einem anderen Material wie die Feder ist - dies kann insbesondere dann der Fall sein, falls das Federmaterial nicht zur Herstellung von Haltevorrichtungen geeignet ist oder aber besondere Anforderungen an die Form bzw. Fähigkeit der Haltevorrichtung gestellt werden.

Mindestens ein Befestigungsteil kann aus einem anderen Material als die Feder sein, je nachdem, welche Art von Feder eingesetzt wird.

Es kann bevorzugt sein, daß mindestens ein Befestigungsteil aus dem gleichen Material wie die Feder ist.

Bei einer bevorzugten Ausführungsform für die relativ einfache Anbringung von leichten Abdeckungen können die Befestigungsteile Ösen sein, die in entsprechend ausgebildete Haken in der abzudeckenden Vertiefung und der Abdeckung einhängbar sind.

Bei der Anwendung der Zugfederanordnung zur Befestigung eines Abdeckung an einer in einer Vertiefung angeordneten Schraube kann das erste Befestigungsteil eine Öse sein, die auf ein Schraubgewinde oder einen Haken od. dgl. derart aufschiebbar ist, daß sie die Feder daran befestigt.

Es ist für die Anwendung in korrosiver Umgebung - bspw. in Feuchträumen oder aber in Wasser günstig, wenn die Zugfederanordnung vollständig aus rostfreiem Stahl besteht. Für diesen Fall kann es aber auch sinnvoll sein, verrottungsfreie und möglichst dauerelastische alterungsbeständige Kunststoffe zu verwenden.

Eine besonders bevorzugte Anwendung der Zugfederanordnung ist zur lösbaren Befestigung von Abdeckungen auf Vertiefungen wie bspw. von Leitungsschächten, Revisionsschächten, Elektroanschlüssen, Zierkappen, Sanitärschrauben an Waschbecken u. dgl..

Es wird somit ein Teil mit einem gegenüber bisherigen Teilen besserem Widerstand gegen Abnehmen der Abdeckung bei gleichzeitiger Lösbarkeit der Abdeckung geschaffen.

Nachfolgend soll die Erfindung näher anhand der beigefügten Zeichnung erläutert werden, in der zeigt:
- Fig. 1: eine schematische Darstellung einer Ausführungsform einer erfindungsgemäßen Zugfederanordnung in perspektivischer Ansicht;
- Fig. 2: eine Zugfederanordnung nach Fig. 1 beim Aufschieben auf ein Schraubengewinde in einer in etwa dreieckigen Vertiefung
- Fig. 3: die Zugfederanordnung der Fig. 2 beim Einhaken in ein Abdeckteil; und
- Fig.4: eine Ansicht einer zu verdeckenden Vertiefung mit Schraube in einem Bidet,
- Fig. 5: einen Längsschnitt durch das Abdeckteil der Fig. 4.

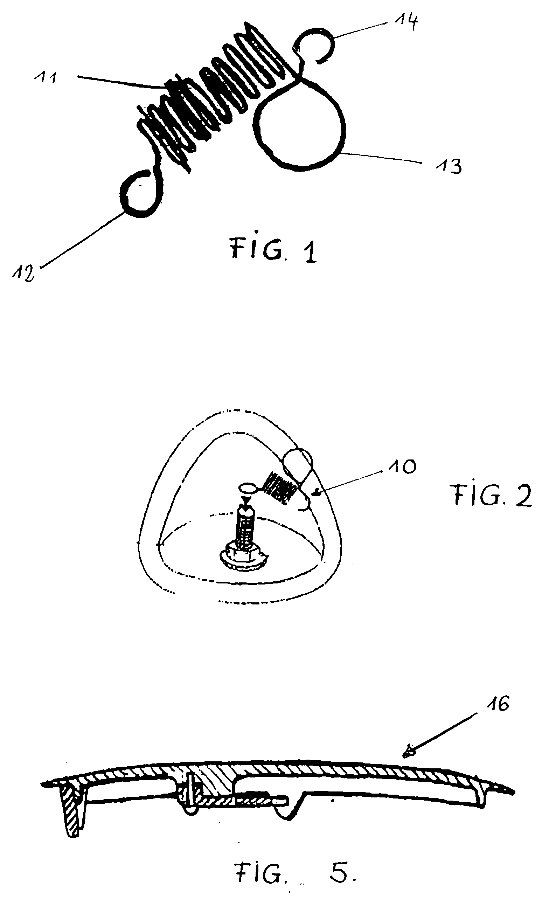

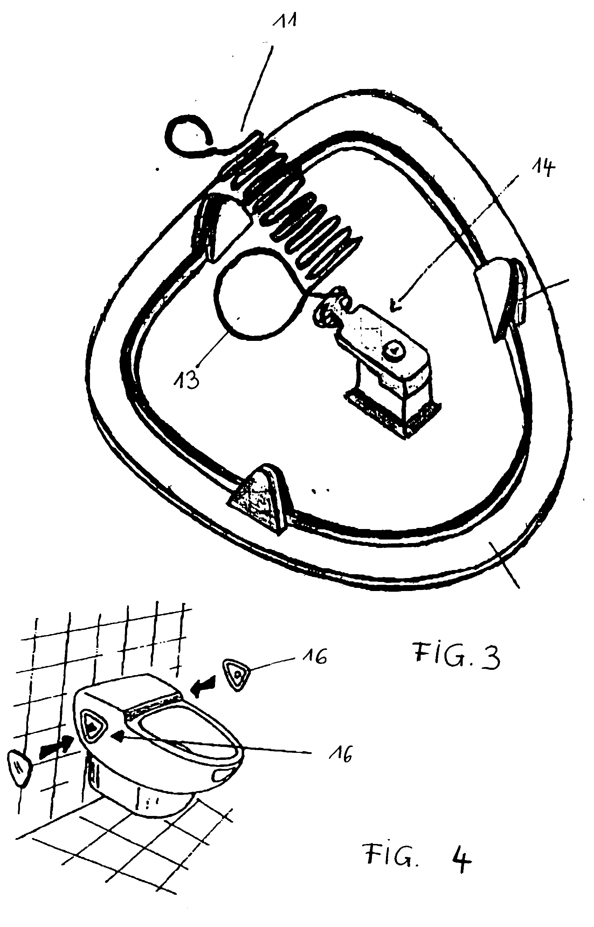

Wie aus Fig. 1 und 2 und 3, die jeweils das gleiche Bauelement in perspektivischer Darstellung sowie dessen Einsatz zeigen, ersichtlich, besteht ein Ausführungsbeispiel einer erfindungsgemäße Zugfederanordnung 10 aus einer Stahlfeder, die Ösen 14, 17 als Befestigungsteile zur Befestigung an einer Schraube in einer Vertiefung sowie zur Befestigung an einem entsprechenden Haken an einem Abdeckteil 16 aufweist. Ferner besitzt das Ausführungsbeispiel eine Zugöse, an der dann die Feder gespannt und gehandhabt werden kann. Die Abdeckung einer Vertiefung erfolgt folgendermaßen:

Zunächst wird die erste Öse in die Befestigungsschraube eingehängt, dann wird die Feder 11 mittels der Zugöse 13 ausreichend gespannt und die zweite Öse 14 in den Haken des - hier dreieckigen - Abdeckteils 16 eingehängt. Sodann wird die Zugöse 13 freigegeben und die Federkraft zieht die Abdeckung 16 in Richtung Schraube. Die Abdeckung 16 kann dann durch den Federzug auf der Vertiefung abschließend und gut abdeckend gehalten werden. Falls ein Austausch der Abdeckung 16 oder sonst Zugang zur Schraube gewünscht wird - bspw., um diese zu öffnen, kann einfach die Abdeckung wieder mittels eines entsprechenden Gegenstandes angehoben und die Zugfederanordnung 10 aus ihr ausgehängt werden, sodaß die Schraube problemlos zugänglich ist.

Selbstverständlich ist die Erfindung keineswegs auf die soeben beschriebene Federanordnung oder Einsatz beschränkt - die Zugfederanordnung 10 kann zum Abdecken jeglicher Vertiefungen, wie sie bspw. bei Lampenanschlüssen, Kabelkanälen etc. auftreten, eingesetzt werden. Dabei ist es keinesfalls erforderlich, daß die Vertiefung eine Schraube aufweist - sie kann ebenso einen Haken (bspw. Lampenanschlüsse) oder andere geeignete, ggf. anzubringende Halteeinrichtungen für die erste Befestigungseinrichtung aufweisen.

Das Material ist auch keineswegs auf Federstahl oder Metall beschränkt - es kann auch federnder Kunststoff oder aber Materialkombinationen, bei denen die Rückzugsvorrichtung ein anderes Material als die Haltevorrichtung oder die Befestigungseinrichtungen ist, sein.

Weitere Ausgestaltungen und Fortentwicklungen sind im Rahmen des Schutzumfangs der Ansprüche dem Fachmann offensichtlich und der Schutzumfang ist keineswegs auf die hier beispielhaft aufgeführten Ausführungsformen begrenzt, die lediglich zur Erläuterung dienen sollen.

## Patentansprüche

1. Zugfederanordnung zur Anbringung von Abdeckteilen (16) und Zierdeckeln über Vertiefungen, mit:
einem ersten Befestigungsteil (12) zum Anbringen der Zugfederanordnung (10) in der Vertiefung, Ausschnitten oder Montageschächten,
einer elastischen Rückzugsvorrichtung (11), die in ihre Ruhelage vorgespannt ist; und
einem zweiten Befestigungsteil (14) zum Anbringen am Inneren des Abdeckteils (16).

2. Zugfederanordnung (10) nach Anspruch 1, dadurch gekennzeichnet, daß sie ferner eine Haltevorrichtung (13) zum Handhaben der Zugfederanordnung (10) aufweist.

3. Zugfederanordnung (10) nach Anspruch 1 oder 2, dadurch gekennzeichnet, daß die elastische Rückzugsvorrichtung (11) eine Feder ist.

4. Zugfederanordnung (10) nach Anspruch 3, dadurch gekennzeichnet, daß die Feder (11) eine Feder aus Metall oder Kunststoff ist.

5. Zugfederanordnung (10) nach Anspruch 4, dadurch gekennzeichnet, daß die Haltevorrichtung (13) aus dem gleichen Material wie die Feder (11) ist.

6. Zugfederanordnung (10) nach Anspruch 4, dadurch gekennzeichnet, daß die Haltevorrichtung (13) aus einem anderen Material wie die Feder (11) ist.

7. Zugfederanordung nach einem der vorangehenden Ansprüche, dadurch gekennzeichnet, daß mindestens ein Befestigungsteil (12, 14) aus einem anderen Material als die Feder (11) ist.

8. Zugfederanordung nach einem der vorangehenden Ansprüche, dadurch gekennzeichnet, daß mindestens ein Befestigungsteil (12)aus dem gleichen Material wie die Feder ist.

9. Zugfederanordnung (10) nach einem der vorangehenden Ansprüche, dadurch gekennzeichnet, daß die Befestigungsteile (12) Ösen sind, die in entsprechend ausgebildete Haken in der abzudeckenden Vertiefung und der Abdeckung (16) einhängbar sind.

10. Zugfederanordnung (10) nach einem der vorangehenden Ansprüche, dadurch gekennzeichnet, daß das erste Befestigungsteil (12) eine Öse ist, die auf ein Schraubgewinde oder einen Haken derart aufschiebbar ist, daß sie die Feder daran befestigt.

11. Zugfederanordnung (10) nach einem der vorangehenden Ansprüche, dadurch gekennzeichnet, daß sie vollständig aus rostfreiem Stahl besteht.
